# EUROPÄISCHE PATENTSCHRIFT

(11) **EP 4 466 967 B1**
(45) Veröffentlichungstag und Bekanntmachung des Hinweises auf die Patenterteilung: **04.02.2026**
(21) Anmeldenummer: 24177460.3
(22) Anmeldetag: 22.05.2024
(51) Int. Cl.: A01B 1/06, A01B 1/08, A01B 1/22

(54) **PENDELHACKE SOWIE ROBOTERFAHRZEUG MIT PENDELHACKE**
PENDULUM HOE AND ROBOT VEHICLE WITH PENDULUM HOE
HOUE PENDULAIRE AINSI QUE VÉHICULE ROBOT AVEC HOUE PENDULAIRE

(30) Priorität: 22.05.2023 DE 102023113362
(43) Veröffentlichungstag der Anmeldung: 27.11.2024
(73) Patentinhaber: Zauberzeug GmbH, 48329 Havixbeck (DE)
(72) Erfinder: von der Forst, Lucas, 48143 Münster (DE)
(74) Vertreter: Euscher, Christoph

(56) Entgegenhaltungen:
- EP-A1- 3 320 763
- DE-A1- 102009 057 727
- DE-B- 1 042 934
- JP-A- 2004 041 112
- US-A1- 2007 193 754

## Beschreibung

Die Erfindung betrifft eine Pendelhacke zur maschinellen Bodenbearbeitung, insbesondere zur Bodenlockerung und/oder Vernichtung von Beikraut, wobei die Pendelhacke ein an einer Pendelaufhängung eines Pendelarmes angeordnetes und um eine Pendelachse begrenzt pendelbares Hackenblatt aufweist, sowie ein autonomes Roboterfahrzeug mit einer derartigen Pendelhacke.

### Stand der Technik

Neben dem Einsatz von chemischen Mitteln oder dem Verbrennen sind aus dem Stand der Technik verschiedene physikalische Verfahren zur Beikrautbekämpfung bekannt, bei welchem die Pflanzen geschnitten, abgeschabt, oder mechanisch überdeckt werden. Das mechanische Prinzip der Pendelhacke ist aus der DE 2827506A1 und der DE 10 2009 057727 bekannt.

### Offenbarung der Erfindung

Aufgabe der vorliegenden Erfindung ist es, eine gegenüber dem Stand der Technik verbesserte Lösung anzugeben.

Die Lösung der Aufgabe erfolgt erfindungsgemäß durch die Merkmale des unabhängigen Anspruchs. Vorteilhafte Ausgestaltungen der Erfindung sind in den Unteransprüchen angegeben.

Erfindungsgemäß vorgesehen ist eine Pendelhacke zur mechanischen Bodenbearbeitung, insbesondere zur Bodenlockerung und/oder Vernichtung von Unkraut, wobei die Pendelhacke ein an einer Pendelaufhängung eines Pendelarmes angeordnetes, um eine, insbesondere horizontale, Pendelachse begrenzt pendelbares Hackenblatt aufweist, und die Pendelhacke zur Fortbewegung an einer Vorrichtung in einer festen Orientierung eingerichtet ist, wobei der Pendelarm sowohl in einer Fortbewegungsrichtung der Pendelhacke als auch quer zu der Fortbewegungsrichtung jeweils einen im wesentlichen festen Winkel aufweist, und wobei die Pendelachse angeordnet ist, in einem zur Fortbewegungsrichtung konstanten Winkel und einem quer zur Fortbewegungsrichtung rechten Winkel maschinell auf den Boden abgesenkt zu werden und/oder in den Boden einzutauchen.

Mit anderen Worten wird ein als Pendelhacke bezeichnetes Gerät vorgeschlagen, welches eingerichtet ist, beispielsweise in Form eines Anbaugeräts in einer vorgegebenen Orientierung an einer Vorrichtung wie beispielsweise einem Traktor oder einem Roboter angeordnet zu werden. Dabei weist das Gerät einen Pendelarm, kurz Arm auf, an dessen Ende ein an einer Pendelaufhängung begrenzt pendelbares Hackenblatt angeordnet ist. Das pendelbare Hackenblatt kann gefedert oder ungefedert ausgeführt sein. Bei einer Federung des Hackenblatts wirkt eine Federkraft einer Auslenkung entgegen. Ohne eine derartige Federung kann das Hackenblatt, abgesehen von einer rückstellenden Gewichtskraft, ohne Gegendruck bis zu einem begrenzenden Anschlag ausgelenkt werden.

Der Arm des Geräts ist an diesem in einer festen Ausrichtung orientiert, kann aber - als Ganzes - in dieser Ausrichtung bewegt werden. Die Pendelachse ist vorteilhaft rechtwinkelig zum Arm, beispielsweise in Fortbewegungsrichtung, orientiert. Der Arm mit der an diesem zur Aufhängung des Hackenblatts angeordneten Pendelachse ist eingerichtet, in einer Bewegung, welche in einem rechten Winkel, d.h. quer zur Fortbewegungsrichtung verläuft, maschinell auf den Boden abgesenkt zu werden. Dies bedeutet, dass die Pendelachse mit dem daran angeordneten Hackenblatt bis auf den Boden absenkbar ist oder in diesen eintaucht. Dabei wird die Absenkbewegung von einer Querbewegung, quer und somit in einem rechten Winkel zur Fortbewegungsrichtung, überlagert.

Bei einem Aufsetzen des Hackenblatts auf den Boden wird dieses aufgrund der Querbewegung ausgelenkt und bei weiterer Absenkung des Armes aufgrund der Federkraft eines gefederten Hackenblatts, oder aufgrund der Begrenzung der Auslenkung durch beispielsweise einen Anschlag, in den Boden gedrückt.

Die Pendelhacke ist dabei derart eingerichtet, dass sich die Pendelachse dabei in einer Arbeitsebene bewegt, welche quer, insbesondere rechtwinkelig, zur Fortbewegungsrichtung angeordnet ist. Diese Arbeitsebene kann senkrecht, oder beispielsweise in einem Anstellwinkel nach hinten, insbesondere einstellbar nach hinten geneigt ausgeführt sein.

Vorteilhaft kann die Bewegung der Pendelachse in der Arbeitsebene in Form einer Rundbewegung, beispielsweise in Form eines Ovals erfolgen. In einer einfachen Ausführungsform kann die Pendelhacke derart eingerichtet sein, dass die Pendelachse in der Arbeitsebene eine Kreisbewegung vollzieht.

Wird die Pendelhacke dabei von einer Vorrichtung in Fortbewegungsrichtung bewegt, vollzieht die Pendelachse mit dem daran befestigten Hackenblatt im Raum eine Schraubenlinie. Die Steigung der vollzogenen Schraubenlinie hängt dabei von dem Verhältnis einer Umlaufgeschwindigkeit der Pendelachse zu einer Fortbewegungsgeschwindigkeit der Vorrichtung ab.

Die erfindungsgemäße Pendelhacke weist den Vorteil auf, dass eine derartige Pendelhacke mechanisch einfach und robust realisierbar ist. Während ihres landwirtschaftlichen Einsatzes wird die Pendelhacke mit anspruchsvollen Umweltbedingungen konfrontiert. Die Pendelhacke sollte daher sowohl bei der Bearbeitung trocken staubiger, sandiger, nasser, ausgetrocknet verhärteter oder steiniger Böden einsatzfähig bleiben.

In einer vorteilhaften Ausgestaltung ist die Bewegung der Pendelachse von einem auf einer Schlittenführung bewegbarem Schlitten steuerbar. Der Pendelarm kann dazu an dem Schlitten angeordnet oder mit diesem verbunden sein.

Für die Ausführung einer Schlittenführung sind robuste Lösungen wie beispielsweise ein massives Gestänge bekannt, welches eine Blockade des Schlittens schadlos überstehen kann. Zum Betrieb in beispielsweise staubig sandiger, oder nasser Umgebung können der Schlitten und die Schlittenführung in einer schützenden Umhüllung, beispielsweise einem Gehäuse, angeordnet sein.

Alternativ oder ergänzend kann die Pendelhacke beispielsweise zum Schutz vor Beschädigung oder zur Optimierung eines Arbeitseinsatzes einen oder mehrere Sensoren aufweisen. Ein Blockadesensor kann die Blockade des Schlittens erkennen und beispielsweise zu einem Stopp oder einem begrenzten Rückwärtslauf des Schlittens führen. Ein Drehmomentsensor kann ein aufzubringendes Drehmoment für einen Antrieb des Schlittens erfassen und zu einer Verringerung einer Bewegungsgeschwindigkeit des Schlittens oder der Fortbewegungsgeschwindigkeit der Vorrichtung führen.

Ein Niederschlagssensor kann beispielsweise Regen erkennen und zu einer vorübergehenden Betriebspause führen. Ebenso kann beispielsweise ein gegebenenfalls optischer Staubsensor zu einer Betriebsunterbrechung führen.

In einer vorteilhaften Ausgestaltung kann die Pendelhacke eine Kommunikationsschnittstelle aufweisen, welche eingerichtet ist, Sensordaten eines oder mehrerer Sensoren an die Vorrichtung zur Fortbewegung oder eine ortsfeste Kontrolleinrichtung zu übertragen. Dabei kann die Kommunikationsschnittstelle schnurgebunden, beispielsweise zur Kommunikation der Pendelhacke mit der Vorrichtung, oder schnurlos, beispielsweise zur Kommunikation mit einer ortsfesten Kontrolleinrichtung, ggf. ein Mobilfunknetz nutzend, ausgeführt sein.

In einer weiteren vorteilhaften Ausgestaltung kann die Pendelhacke selbst eine Steuereinheit aufweisen. Diese kann beispielsweise eingerichtet sein, abhängig von Sensordaten eines oder mehrerer Sensoren die Fortbewegungsgeschwindigkeit der Vorrichtung zu steuern und/oder die Bewegungsgeschwindigkeit des Schlittens zu steuern und/oder einen Anstellwinkel der Arbeitsebene - und somit des Hackenblatts - zu steuern.

In einer Ausgestaltungsvariante kann die Pendelachse in Fortbewegungsrichtung ausgerichtet angeordnet und die Pendelhacke eingerichtet sein, die Pendelachse in einer Bewegung quer zur Fortbewegungsrichtung maschinell in Form eines Bogens, insbesondere in Form eines Kreisbogens, insbesondere in Form eines Halbkreises abzusenken mit dem Zweck, das Hackenblatt in den Boden einzuführen.

Im Weiteren kann die Pendelhacke eingerichtet sein, die Pendelachse maschinell in konstanter Tiefe quer zur Fortbewegungsrichtung zu bewegen. Vorteilhaft kann die Bewegungsbahn der Pendelachse eine ovale Form aufweisen. Insbesondere kann sie eine Kurvenform aufweisen, welche zwei mit geraden Abschnitten verbundene Halbkreise aufweist, welche im Sprachgebrauch ebenfalls als Oval bezeichnet wird. Somit kann die Pendelhacke eingerichtet sein, dass eine Bewegung der Pendelachse respektive der Pendelaufhängung oval in einer Arbeitsebene quer zur Fortbewegungsrichtung erfolgt. Überlagert mit einer kontinuierlichen oder schrittweisen Fortbewegung in Fortbewegungsrichtung kann so jeder Punkt in einer Saatreihe von Beikraut bzw. Unkraut befreit werden.

Das Hackenblatt kann dazu beispielsweise eine U-Form, insbesondere die Form der Umrandung eines Trapezes oder die eines gekappten Kreissegments aufweisen. In einer vorteilhaften Ausgestaltung der Pendelhacke ist das Hackenblatt austauschbar ausgeführt. Dies bietet den Vorteil, in Abhängigkeit vom zu bearbeitenden Boden unterschiedliche Hackenblätter verwenden zu können oder ein beschädigtes Hackenblatt ersetzen zu können.

In einer vorteilhaften Ausgestaltung weist die Pendelhacke einen Kreuzschlitten mit einer XY-Schlittenführung auf, wobei die x- und die y-Achse die Arbeitsebene oder eine zu dieser Ebene parallele Ebene aufspannen, in der sich die Pendelachse bewegt.

Dabei sind zwei Ausgestaltungsvarianten möglich, von denen die erste dadurch charakterisiert ist, dass der Schlitten entlang zweier Linearführungen in X- sowie in Y-Richtung bewegt wird. In diesem Fall wird das Werkzeug, vorliegend der Arm der Pendelhacke, an dem Schlitten befestigt und mit diesem in der Arbeitsebene positioniert. Diese Variante bietet den Vorteil, dass sie sehr robust ausbildbar ist.

Bei der zweiten Ausgestaltungsvariante wird der Schlitten nur entlang einer ersten Achse, vorzugsweise einer ersten horizontal ausgerichteten Linearführung in X-Richtung bewegt. Eine zweite, ggf. unter einem Anstellwinkel, im Wesentlichen vertikal angeordnete Linearführung befindet sich auf dem Schlitten und ist eingerichtet, die Linearführung in Y-Richtung zu bewegen. In diesem Fall ist das Werkzeug an der Linearführung angeordnet. Vorteilhaft kann bei dieser Variante die Linearführung in Y-Richtung als Arm der Pendelhacke ausgeführt sein, oder anders herum formuliert, kann der Arm der Pendelhacke als Linearführung in Y-Richtung ausgeführt sein. Diese Variante weist das Merkmal auf, dass eine der Linearführungen zugleich die Funktion des Armes der Pendelhacke aufweist. Damit bietet sie den Vorteil, mit einem geringeren Materialaufwand umsetzbar zu sein.

Mit anderen Worten kann der Schlitten zugleich die Funktion eines Werkzeugträgers aufweisen, oder eine, vorzugsweise als Schiene ausgeführte zweite Achse, insbesondere als Achse einer Linearführung in Y-Richtung, führen, wobei diese Achse zugleich als Werkzeugträger ausgeführt ist oder ein solcher an ihr angeordnet ist, und wobei an dem Werkzeugträger die Pendelaufhängung angeordnet ist.

Zum Positionieren des Schlittens mit Werkzeugträger respektive eines an der Linearführung in Y-Richtung angeordneten Werkzeugträgers in der Arbeitsebene sind aus dem Stand der Technik verschiedene Lösungen wie beispielsweise Riemenantriebe, Spindeln oder Zahnstangen bekannt.

Alternativ zu einem jeweils einzeln ausgeführten direkten Antrieb in X-Richtung sowie einem in Y-Richtung kann der Werkzeugträger am Schlitten respektive der Linearführung auch von einem Mitnehmer geführt ausgeführt sein.

Dazu kann in einer Ebene parallel zur Arbeitsebene bzw. zur XY-Schlittenführung eine Bewegungsführung mit einem Mitnehmer, insbesondere einem Führungsfinger angeordnet sein, welcher in Form eines senkrecht zur Arbeitsebene und drehbar mit dem Werkzeugträger verbundenen, auch als Abnehmerpin bezeichneten Stiftes ausgeführt sein kann, und wobei durch dessen seitliche Verschiebung der Werkzeugträger in der Arbeitsebene führbar ist. In einer massiven Ausführung kann der Mitnehmer bzw. Stift als ein mit der Bewegungsführung verbundenes Drehgelenk ausführt sein.

Die Bewegungsführung kann in Form eines Zuges, beispielsweise eines Seil-, Riemen- oder Kettenzuges, ausgeführt sein. Vorteilhaft kann der Zug geschlossen ausgeführt sein, d.h. der Zug, insbesondere in Form eines Seil-, Riemen- oder Kettenzugs, weist eine geschlossene Linie auf. In einer vorteilhaften Ausgestaltungsform ist die Pendelhacke somit eingerichtet, dass die Pendelachse in der Arbeitsebene eine Rundbewegung ausführt. Diese Rundbewegung ist durch eine entsprechende Bewegungsführung des Zuges erzielbar.

Eine derartige Führung in Form eines Zuges bietet den Vorteil, dass für die Bewegung des Werkzeugträgers in X- bzw. Y-Richtung nur ein Antrieb erforderlich ist. Desweiteren bietet eine derartige Führung den Vorteil, dass sie - zum Beispiel im Vergleich zu einem Spindelantrieb - eine relativ schnelle Bewegung des Schlittens ermöglicht. Weiterhin kann die Zuglinie durch ein Einfügen von Umlenkrollen in den Zugweg, bei einem Zahnriemen oder einer Kette durch ein Einfügen von Zahnrädern in den Zugweg, sehr flexibel gestaltet sein.

In einer vorteilhaften Ausgestaltungsform weist eine Seil-, Riemen- oder Kettenlinie zumindest zwei Kurven und zwei geradlinige Abschnitte auf.

Davon kann zumindest ein geradliniger Abschnitt parallel zur Bodenoberfläche und derart angeordnet sein, dass das Hackenblatt in den Boden eintauchbar und in konstanter Tiefe quer zur Fortbewegungsrichtung bewegbar ist.

Vorteilhaft ist der Zug als geschlossener Kettenzug ausgeführt, der über zwei horizontal nebeneinander angeordnete Ritzel geführt ist. Dabei weist die Ausführung des Zugs als Kettenzug den Vorteil auf, dass mit diesem vergleichsweise große Kräfte übertragen werden können, wobei zu diesem Zweck die Stiftführung vorteilhaft als Drehgelenk ausführbar ist.

Bei der vorgenannten Führung über zwei Ritzel entspricht der Durchmesser zumindest eines Ritzels einer Absenktiefe der Pendelaufhängung.

In einer erweiterten Ausführungsvariante kann das als Pendelhacke bezeichnete Gerät ein weiteres Werkzeug, sozusagen als Zusatzwerkzeug aufweisen.

So kann die Pendelhacke in einer Ausgestaltungsform einen vertikal absenkbaren Schneidbohrer aufweisen. Das Zusatzwerkzeug, insbesondere in Form eines absenkbaren Schneidbohrers, kann als weiteres Werkzeug an dem Werkzeugträger oder als weiteres Werkzeug an dem Schlitten angeordnet sein. Dabei kann der absenkbare Schneidbohrer einen separaten Absenkmechanismus aufweisen.

Zu diesem Zweck kann die Pendelhacke beispielsweise derart ausgeführt sein, dass der Schlitten nur entlang der ersten Achse, d.h. in horizontaler oder auch X-Richtung beweglich ist, wobei eine Absenkung des Pendelarms, respektive der zweiten Linearführung in Y-Richtung, durch einen direkten Antrieb oder auch von einem Mitnehmer geführt ausgeführt sein kann, und eine Absenkung des Schneidbohrers, respektive einer weiteren Linearführung in Y-Richtung, durch einen Bohrvortriebs-Antrieb ausgeführt sein kann.

In weiteren Ausgestaltungsvarianten kann die Pendelhacke eine optische Vorrichtung, insbesondere eine Kamera, und/oder weitere Sensoren aufweisen.

Die optische Vorrichtung kann zur Erfassung der Position des Pendelarms und/oder des Schneidbohrers eingerichtet sein, die weiteren Sensoren können beispielsweise ermitteln, ob sich der Pendelarm und/oder der Schneidbohrer in einer Ruheposition befinden. Von der optischen Vorrichtung und/oder den weiteren Sensoren erzeugte Daten können beispielsweise einer Überwachungseinrichtung zugeführt werden, welche beispielsweise an der Pendelhacke angeordnet ist.

In einer Ausgestaltungsvariante kann die Pendelhacke eine, beispielsweise optische, Überwachungseinrichtung aufweisen, die eingerichtet ist, das Absenken von Schneidbohrer und Hackenblatt zu koordinieren.

Insbesondere kann die Pendelhacke eine Überwachungseinrichtung aufweisen, die eingerichtet ist, ein gleichzeitiges Absenken von Schneidbohrer und Hackenblatt zu verhindern.

Der Schneidbohrer kann als ein Bohrer mit in Relation zum Bohrdurchmesser geringer Kerndicke und großen Querschneiden ausgeführt sein. Er kann im Bezug zur Fortbewegungsrichtung vor oder hinter dem Hackenblatt angeordnet sein.

Erfindungsgemäß vorgesehen ist ferner ein Roboter mit einer vorbeschriebenen Pendelhacke, wobei die erste Achse, und damit die Ebene, in welcher sich die Pendelachse bewegt, quer zur Fortbewegungsrichtung des Roboters angeordnet ist.

In weiteren Ausgestaltungsvarianten kann die vorbeschriebene Pendelhacke auf einer Anbauvorrichtung oder auf einer Anhängevorrichtung angeordnet sein, wobei die erste Achse der Pendelhacke quer zur Fortbewegungsrichtung der Vorrichtung angeordnet ist

### Zeichnungen

Nachfolgend wird die Erfindung unter Bezugnahme auf die anliegenden, schematischen Zeichnungen anhand bevorzugter Ausführungsformen näher erläutert.

Es zeigen
- Fig. 1: ein bevorzugtes Ausführungsbeispiel der beschriebenen Pendelhacke;
- Fig. 2: eine Führung zur maschinellen Steuerung der Pendelhacke;
- Fig. 3: verschiedene Positionen der Pendelachse bei dem bevorzugten Ausführungsbeispiel einer Pendelhacke;
- Fig. 4: verschiedene Positionen von Hackenblatt und Schneidbohrer.

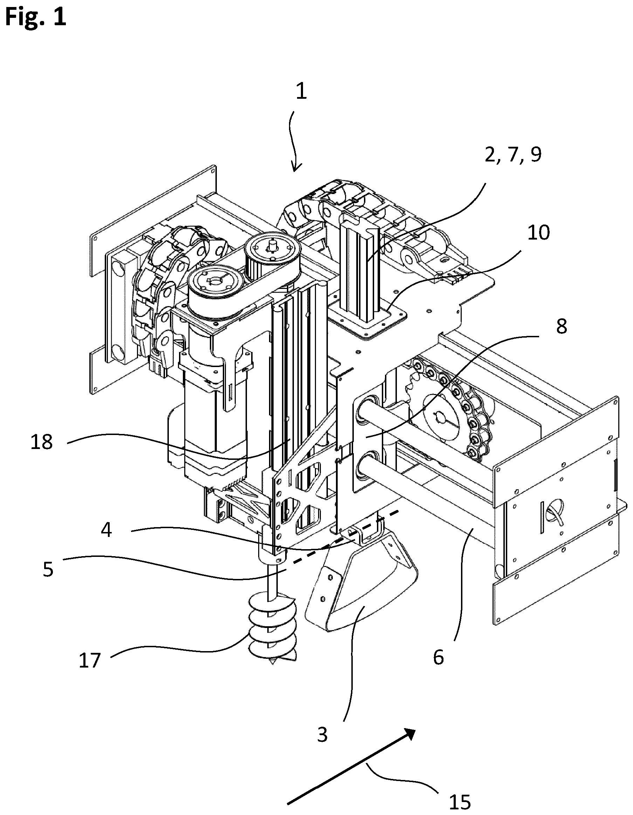

Fig. 1 zeigt eine Pendelhacke 1 zur mechanischen Bodenbearbeitung, insbesondere zur Bodenlockerung und/oder Vernichtung von Beikraut, wobei die Pendelhacke 1 ein an einer Pendelaufhängung 4 eines Pendelarmes 2 angeordnetes, um eine horizontale Pendelachse 5 begrenzt pendelbares Hackenblatt 3 aufweist.

Die Pendelhacke 1 ist zur Fortbewegung an einer maschinellen Vorrichtung in einer festen Orientierung eingerichtet, wobei der Pendelarm 2 sowohl zu einer Fortbewegungsrichtung 15 der Pendelhacke 1 als auch quer zu der Fortbewegungsrichtung 15 jeweils einen im Wesentlichen festen Winkel aufweist. Dabei ist die Pendelachse 5 angeordnet, in einem zur Fortbewegungsrichtung 15 konstanten Winkel und einem quer zur Fortbewegungsrichtung 15 rechten Winkel maschinell abgesenkt zu werden.

Eine Bewegung der Pendelaufhängung 4 und damit eine Pendelbewegung erfolgt in einer Arbeitsebene quer zur Fortbewegungsrichtung 15. An einer horizontalen Achse 6 ist verschiebbar ein Schlitten 8 angeordnet. Das Hackenblatt 3 ist um einen Winkel von bis zu 30 Grad auslenkbar, um eine weite Bewegung auszuführen.

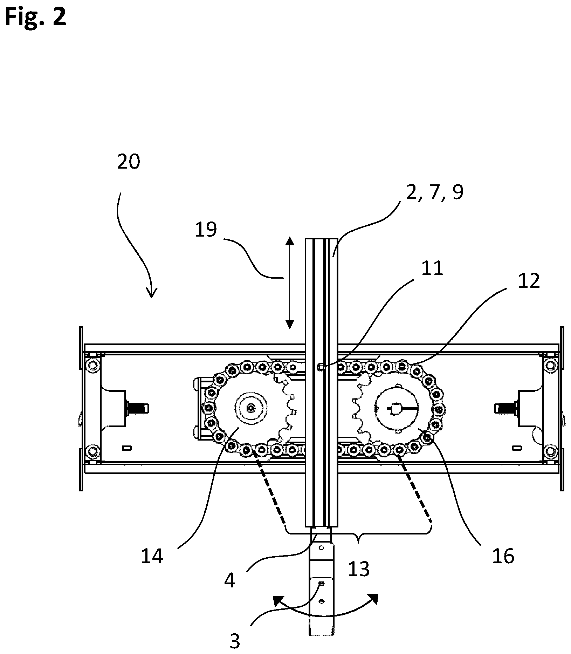

Eine Bewegung des Pendelarmes 2 erfolgt durch eine Antriebskraft eines Motors, der eine in Fig. 2 gezeigte Segmentkette 12 antreibt und somit die Pendelbewegung der Pendelhacke 1 ermöglicht.

Ein Schneidbohrer 17 ist an einer vertikalen Achse befestigt und kann unabhängig von dem Pendelarm 2 mit Hilfe eines separaten Absenkmechanismus 18, d.h. insbesondere mit Hilfe eines weiteren Motors nach oben und unten entlang der Richtungen 19 bewegt werden, um starkwüchsige oder größere Unkräuter zu entfernen, die mit der Pendelbewegung allein nicht entfernt werden können.

Die Arbeitsebene quer zur Fortbewegungsrichtung 15 wird durch zwei vorzugsweise senkrecht zueinanderstehende Achsen 6, 7 aufgespannt, wobei auf der ersten, horizontal orientierten Achse 6 ein Schlitten 8 angeordnet ist. An dem Schlitten 8 ist eine vertikal orientierte Führung 10 angeordnet, in welcher die zweite, als Schiene ausgeführte Achse 7 führbar ist.

Die zweite Achse 7 ist zugleich als Werkzeugträger 9 ausgeführt, an welchem die Pendelaufhängung 4 angeordnet ist.

Fig. 2 zeigt eine Bewegungsführung 20 zur maschinellen Steuerung einer Pendelhacke 1 gemäß Fig.1.

Parallel zu der Arbeitsebene ist eine Bewegungsführung 20 mit einem Mitnehmer in Form eines Führungsfingers 11 angeordnet, welcher wiederum in Form eines senkrecht zur Arbeitsebene und drehbar mit dem Werkzeugträger 9 verbundenen Stiftes ausgeführt ist, und durch dessen seitliche Verschiebung der Werkzeugträger 9 in der Arbeitsebene führbar ist.

Die Segmentkette 12 ist geschlossen ausgeführt und der Führungsfinger 11 über eine Bohrung und eine Gleitbuchse mit der vertikalen Achse 7 verbunden.

Die auch als Kettenzug bezeichnete Segmentkette 12 ist über zwei horizontal nebeneinander angeordnete Ritzel 14 und 16 geführt. Wenn die Segmentkette 12 über ein Ritzel 14, 16 gedreht wird, folgt der Pendelarm 2 der Bewegung der Kette 12.

Der Kettenzug 12 weist einen geradlinigen, horizontal ausgerichteten Abschnitt 13 auf, der derart tief angeordnet ist, dass das Hackenblatt 3 in den Boden eintauchbar und in konstanter Tiefe quer zur Fortbewegungsrichtung 15 bewegbar ist.

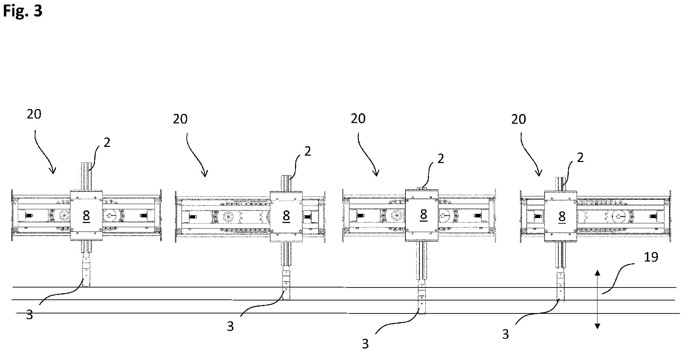

Der Führungsfinger 11 kann dabei vier Endpositionen einnehmen, die in Fig. 3 von links (Pos 1) nach rechts (Pos 4) gezeigt sind.

Pos 1: Der Pendelarm 2 befindet sich in einer oberen Endposition, z.B. während einer Bewegung nach rechts.

Pos. 2: Der Pendelarm 2 befindet sich in einer rechten Endposition, z.B. während einer Bewegung nach unten.

Pos. 3: Der Pendelarm 2 befindet sich in einer unteren Endposition, z.B. während einer Hackbewegung im Boden.

Pos. 4: Der Pendelarm 2 befindet sich in einer linken Endposition, z.B. während einer Bewegung nach oben.

Dabei ist eine Absenktiefe entlang der Richtungen 19 mittels dreier Hilfslinien verdeutlicht. Die Absenktiefe entspricht dem Durchmesser der hier gleichgroßen Ritzel 14 und 16.

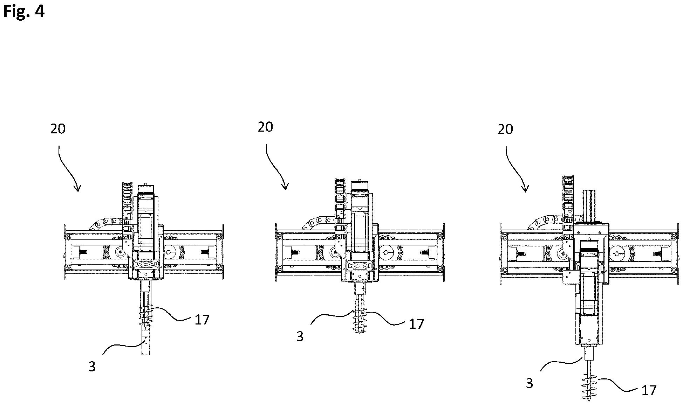

Um sicherzustellen, dass die Pendelhacke 1 nicht über den Boden hackt, wenn der Spiralbohrer 17 positioniert wird, koordiniert eine Überwachungseinrichtung das Absenken von Hackenblatt 3 und Schneidbohrer 17. Als Ergebnis der Koordination durch die Überwachungsvorrichtung zeigt Fig. 4 drei grundsätzliche zulässige Arbeitspositionen von Hackenblatt 3 sowie Spiralbohrer 17, angeordnet von links nach rechts, in Form von "Hackenblatt abgesenkt", "Freilauf" und "Spiralbohrer abgesenkt".

## Patentansprüche

1. Pendelhacke (1) zur mechanischen Bodenbearbeitung, insbesondere zur Bodenlockerung und/oder Vernichtung von Beikraut, wobei die Pendelhacke (1) ein an einer Pendelaufhängung (4) eines Pendelarmes (2) angeordnetes, um eine, insbesondere horizontale, Pendelachse (5) begrenzt pendelbares Hackenblatt (3) aufweist, **dadurch gekennzeichnet, dass**
die Pendelhacke (1) zur Fortbewegung an einer maschinellen Vorrichtung in einer festen Orientierung eingerichtet ist, wobei der Pendelarm (2) sowohl zu einer Fortbewegungsrichtung (15) der Pendelhacke (1) als auch quer zu der Fortbewegungsrichtung (15) jeweils einen im Wesentlichen festen Winkel aufweist und wobei die Pendelachse (5) angeordnet ist, in einem zur Fortbewegungsrichtung (15) konstanten Winkel und einem quer zur Fortbewegungsrichtung (15) rechten Winkel maschinell abgesenkt zu werden.

2. Pendelhacke (1) nach Anspruch 1, **dadurch gekennzeichnet,**
**dass** die Pendelhacke (1) eingerichtet ist, dass eine Bewegung der Pendelaufhängung (4) in einer Arbeitsebene quer zur Fortbewegungsrichtung (15) erfolgt.

3. Pendelhacke (1) nach Anspruch 2, **dadurch gekennzeichnet, dass** die Pendelhacke (1) derart eingerichtet ist, dass eine Bewegung der Pendelachse (5) in der Arbeitsebene in Form einer Rundbewegung, insbesondere einer ovalen Rundbewegung oder einer Kreisbewegung erfolgt.

4. Pendelhacke (1) nach Anspruch 3, **dadurch gekennzeichnet, dass** die Bewegung von einem Schlitten (8) auf zumindest einer Schlittenführung gesteuert wird.

5. Pendelhacke (1) nach Anspruch 4, **dadurch gekennzeichnet, dass** die Pendelhacke (1) zur Schlittenführung entlang einer ersten Achse (6) eine erste horizontale Linearführung aufweist, und der Schlitten (8) in der Arbeitsebene verfahrbar ist.

6. Pendelhacke (1) nach Anspruch 4 oder Anspruch 5, **dadurch gekennzeichnet, dass** die Schlittenführung als Kreuzschlittenführung bzw. XY-Schlittenführung, und der Schlitten (8) als Kreuzschlitten ausgeführt ist.

7. Pendelhacke (1) nach Anspruch 5, **dadurch gekennzeichnet, dass** die Pendelhacke (1) in der Arbeitsebene und rechtwinkelig zur ersten Linearführung entlang der ersten Achse (6) eine zweite, insbesondere vertikale, Linearführung (10) aufweist, der Schlitten (8) entlang einer zweiten Achse (7) der zweiten Linearführung (10) verfahrbar ist und an dem Schlitten (8) in Funktion eines Werkzeugträgers (9) der Pendelarm (2) angeordnet ist, oder die zweite Linearführung (10) entlang des Schlittens (8) verfahrbar ist und an der zweiten Linearführung (10) in Funktion eines Werkzeugträgers (9) die Pendelaufhängung (4) angeordnet ist.

8. Pendelhacke (1) nach Anspruche 7, **dadurch gekennzeichnet, dass** parallel zu der Arbeitsebene eine Bewegungsführung (20) mit einem Mitnehmer (11) angeordnet ist, welcher insbesondere in Form eines senkrecht zur Arbeitsebene und drehbar mit dem Werkzeugträger (9) verbundenen Führungsfingers (11), Abnehmerpins oder Stiftes ausführbar ist, durch dessen seitliche Verschiebung der Werkzeugträger (9) in der Arbeitsebene führbar ist.

9. Pendelhacke (1) nach Anspruch 8, **dadurch gekennzeichnet, dass** die Bewegungsführung (20) in Form eines Zuges (12), insbesondere eines Seil-, Riemen- oder Kettenzuges, ausgeführt ist.

10. Pendelhacke (1) nach Anspruch 9, **dadurch gekennzeichnet, dass** der Zug (12) als geschlossener Kettenzug ausgeführt ist, der über zwei horizontal nebeneinander angeordnete Ritzel (14), (16) geführt ist.

11. Pendelhacke (1) nach einem der Ansprüche 8 bis 10, **dadurch gekennzeichnet, dass** die Schlittenführung und/oder die Bewegungsführung (20) einen umhüllenden Schutz, insbesondere in Form eines Gehäuses, aufweisen.

12. Pendelhacke (1) nach einem der vorherigen Ansprüche, **dadurch gekennzeichnet, dass** die Pendelhacke (1) eine Kommunikationsschnittstelle aufweist, die eingerichtet ist, Sensordaten von Sensoren der Pendelhacke (1) an die Vorrichtung und/oder eine ortsfeste Kontrolleinrichtung zu übertragen.

13. Pendelhacke (1) nach einem der Ansprüche 7 bis 12, **dadurch gekennzeichnet, dass** die Pendelhacke (1) einen absenkbaren Schneidbohrer (17) aufweist, der als weiteres Werkzeug an dem Schlitten (8) oder an dem Werkzeugträger (9) angeordnet ist.

14. Pendelhacke (1) nach Anspruch 13, **dadurch gekennzeichnet, dass** die Pendelhacke (1) eine, insbesondere optische, Überwachungseinrichtung aufweist, die eingerichtet ist, ein Absenken von Schneidbohrer (17) und Hackenblatt (3) zu koordinieren.

15. Anordnung aus einer Pendelhacke (1) nach einem der vorherigen Ansprüche und einer maschinellen Vorrichtung zur Fortbewegung der Pendelhacke (1), **dadurch gekennzeichnet, dass** die erste Achse (6) quer zur Fortbewegungsrichtung (15) der, insbesondere als autonomer Roboter ausgeführten, Vorrichtung ausgerichtet ist.

## Claims

1. Pendulum hoe (1) for mechanical soil cultivation, in particular for loosening the soil and/or destroying weeds, wherein the pendulum hoe (1) has a hoe blade (3) arranged on a pendulum suspension (4) of a pendulum arm (2), wherein the hoe blade (3) can swing to a limited extend about a pendulum axis (5), in particular a horizontal one, **characterized in that**
the pendulum hoe (1) is set up for movement on a mechanical device in a fixed orientation, wherein the pendulum arm (2) has a substantially fixed angle both to a direction of movement (15) of the pendulum hoe (1) and transversely to the direction of movement (15), and wherein the pendulum axis (5) is arranged to be lowered mechanically at an angle constant to the direction of movement (15) and at a right angle transversely to the direction of movement (15).

2. Pendulum hoe (1) according to claim 1, **characterized in that** the pendulum hoe (1) is arranged such that a movement of the pendulum suspension (4) takes place in a working plane transverse to the direction of movement (15).

3. Pendulum hoe (1) according to claim 2, **characterized in that** the pendulum hoe (1) is arranged such that a movement of the pendulum axis (5) in the working plane takes place in the form of a round movement, in particular an oval round movement or a circular movement.

4. Pendulum hoe (1) according to claim 3, **characterized in that** the movement is controlled by a carriage (8) on at least one carriage guide.

5. Pendulum hoe (1) according to claim 4, **characterized in that** the pendulum hoe (1) has a first horizontal linear guide for guiding the carriage along a first axis (6), and the carriage (8) is movable in the working plane.

6. Pendulum hoe (1) according to claim 4 or claim 5, **characterized in that** the carriage guide is a cross carriage guide or XY carriage guide, and the carriage (8) is designed as a cross carriage.

7. Pendulum hoe (1) according to claim 5, **characterized in that** the pendulum hoe (1) has orthogonal to the first linear guide (10), along the first axis (6), a second, in particular vertical, linear guide (10) in the working plane, the carriage (8) is movable along a second axis (7) of the second linear guide (10), and the pendulum arm (2) is arranged on the carriage (8) in the function of a tool carrier (9), or the second linear guide (10) is movable along the carriage (8) and on the second linear guide (10) in the function of a tool carrier (9), the pendulum suspension (4) is arranged.

8. Pendulum hoe (1) according to claim 7, **characterized in that** a movement guide (20) with a driver (11) is arranged parallel to the working plane, which can be designed in particular in the form of a guide finger (11), a take-up pin or a pin, rotatably and perpendicular to the working plane connected with the tool carrier (9), and by which lateral displacement the tool carrier (9) can be guided in the working plane.

9. Pendulum hoe (1) according to claim 8, **characterized in that** the movement guidance (20) is designed in the form of a pull (12), in particular a rope, belt or chain hoist.

10. Pendulum hoe (1) according to claim 9, **characterized in that** the pull (12) is designed as a closed chain hoist which is guided over two horizontally adjacently arranged pinions (14), (16).

11. Pendulum hoe (1) according to one of claims 8 to 10, **characterized in that** the carriage guide and/or the movement guide (20) have an enclosing protection, in particular in the form of a housing.

12. Pendulum hoe (1) according to one of the preceding claims, **characterized in that** the pendulum hoe (1) has a communication interface which is configured to transmit sensor data from sensors of the pendulum hoe (1) to the device and/or a stationary control device.

13. Pendulum hoe (1) according to one of claims 7 to 12, **characterized in that** the pendulum hoe (1) has a lowerable cutting drill (17) which is arranged as a further tool on the carriage (8) or on the tool carrier (9).

14. Pendulum hoe (1) according to claim 13, **characterized in that** the pendulum hoe (1) has a monitoring device, in particular an optical device, which is configured to coordinate the lowering of the cutting drill (17) and the hoe blade (3).

15. Arrangement comprising a pendulum hoe (1) according to one of the preceding claims and a mechanical device for moving the pendulum hoe (1), **characterized in that** the first axis (6) is aligned transversely to the direction of movement (15) of the device, which is designed in particular as an autonomous robot.

## Revendications

1. Houe pendulaire (1) pour le travail mécanique du sol, notamment pour ameublir le sol et/ou détruire les mauvaises herbes, dans laquelle la houe pendulaire (1) comporte une lame de houe (3) disposée sur une suspension pendulaire (4) d'un bras pendulaire (2), dans laquelle la lame de houe (3) peut osciller sur une distance limitée autour d'un axe pendulaire (5), notamment horizontal, **caractérisée en ce que** la houe pendulaire (1) est conçue pour se déplacer sur un dispositif mécanique dans une orientation fixe, dans lequel le bras pendulaire (2) a un angle sensiblement fixe à la fois par rapport à la direction de mouvement (15) de la houe pendulaire (1) et transversalement à la direction de mouvement (15), et dans laquelle l'axe pendulaire (5) est agencé pour être abaissé mécaniquement à un angle constant par rapport à la direction de mouvement (15) et à angle droit transversalement à la direction de mouvement (15).

2. Houe pendulaire (1) selon la revendication 1, **caractérisée en ce que** la houe pendulaire (1) est agencée de telle sorte qu'un mouvement de la suspension pendulaire (4) se produise dans un plan de travail transversal à la direction du mouvement (15).

3. Houe pendulaire (1) selon la revendication 2, **caractérisée en ce que** la houe pendulaire (1) est agencée de telle sorte qu'un mouvement de l'axe du pendule (5) dans le plan de travail se produise sous la forme d'un mouvement rond, en particulier un mouvement ovale rond ou un mouvement circulaire.

4. Houe pendulaire (1) selon la revendication 3, **caractérisée en ce que** le mouvement est contrôlé par un chariot (8) sur au moins un guide de chariot.

5. Houe pendulaire (1) selon la revendication 4, **caractérisée en ce que** la houe pendulaire (1) possède un premier guide linéaire horizontal pour guider le chariot le long d'un premier axe (6), et le chariot (8) est mobile dans le plan de travail.

6. Houe pendulaire (1) selon la revendication 4 ou la revendication 5, **caractérisée en ce que** le guide du chariot est un guide de chariot croisé ou un guide de chariot XY, et que le chariot (8) est conçu comme un chariot croisé.

7. Houe pendulaire (1) selon la revendication 5, **caractérisée en ce que** la houe pendulaire (1) comporte, orthogonalement au premier guide linéaire (10), le long du premier axe (6), un deuxième guide linéaire, en particulier vertical, (10) dans le plan de travail, le chariot (8) est mobile le long d'un deuxième axe (7) du deuxième guide linéaire (10), et le bras pendulaire (2) est disposé sur le chariot (8) en fonction d'un porte-outil (9), ou bien le deuxième guide linéaire (10) est mobile le long du chariot (8) et sur le deuxième guide linéaire (10) en fonction d'un porte-outil (9), la suspension pendulaire (4) est disposée.

8. Houe pendulaire (1) selon la revendication 7, **caractérisée en ce qu'**un guide de mouvement (20) avec un entraîneur (11) est disposé parallèlement au plan de travail, qui peut être conçu notamment sous la forme d'un doigt de guidage (11) relié perpendiculairement au plan de travail et de manière rotative avec le porte-outil (9), une doigt de guidage ou une goupille de positionnement, par le déplacement latéral duquel le porte-outil (9) peut être guidé dans le plan de travail.

9. Houe pendulaire (1) selon la revendication 8, **caractérisée en ce que** le guidage du mouvement (20) est conçu sous la forme d'une traction (12), notamment une traction par corde, courroie ou chaîne.

10. Houe pendulaire (1) selon la revendication 9, **caractérisée en ce que** la traction (12) est conçue comme un palan à chaîne fermée qui est conduit sur deux pignons (14), (16) disposés côte à côte horizontalement.

11. Houe pendulaire (1) selon l'une des revendications 8 à 10, **caractérisée en ce que** le guide du chariot et/ou le guide de mouvement (20) ont une protection enveloppante, notamment sous la forme d'un boîtier.

12. Houe pendulaire (1) selon l'une des revendications précédentes, **caractérisée en ce que** la houe pendulaire (1) possède une interface de communication configurée pour transmettre des données de capteurs provenant des capteurs de la houe pendulaire (1) à l'appareil et/ou à un dispositif de commande stationnaire.

13. Houe pendulaire (1) selon l'une des revendications 7 à 12, **caractérisée en ce que** la houe pendulaire (1) comporte un foret de coupe abaissable (17) qui est disposé comme un outil supplémentaire sur le chariot (8) ou sur le porte-outil (9).

14. Houe pendulaire (1) selon la revendication 13, **caractérisée en ce que** la houe pendulaire (1) comporte un dispositif de surveillance, notamment un dispositif optique, configuré pour coordonner l'abaissement du foret de coupe (17) et de la lame de houe (3).

15. Dispositif comprenant une houe pendulaire (1) selon l'une des revendications précédentes et un dispositif mécanique pour déplacer la houe pendulaire (1), **caractérisé en ce que** le premier axe (6) est aligné transversalement à la direction de mouvement (15) du dispositif, qui est conçu en particulier comme un robot autonome.
